Europäisches Patentamt

(19) European Patent Office

Office européen des brevets

(11) EP 0 631 989 B1

(12) **FASCICULE DE BREVET EUROPEEN**

(45) Date de publication et mention
de la délivrance du brevet:
**22.10.1997 Bulletin 1997/43**

(51) Int. Cl.$^6$: **C02F 3/12**, C02F 3/30

(21) Numéro de dépôt: **94401384.6**

(22) Date de dépôt: **21.06.1994**

(54) **Procédé d'épuration d'eaux usées par voie biologique et installations pour sa mise en oeuvre**

Verfahren und Anlage zur biologischen Reinigung von Abwasser

Process and installation for biological treatment of waste water

(84) Etats contractants désignés:
**AT BE CH DE DK ES FR GB GR IE IT LI LU MC NL PT SE**

(30) Priorité: **02.07.1993 FR 9308120**

(43) Date de publication de la demande:
**04.01.1995 Bulletin 1995/01**

(73) Titulaire: **LYONNAISE DES EAUX
F-92000 Nanterre (FR)**

(72) Inventeurs:
• **Fayoux, Christian
F-78000 Versailles (FR)**
• **Audic, Jean-Marc
F-78700 Conflans Sainte Honorine (FR)**

(74) Mandataire: **Cournarie, Michèle et al
Office Blétry
2, boulevard de Strasbourg
75010 Paris (FR)**

(56) Documents cités:
EP-A- 0 309 352          EP-A- 0 346 013
FR-A- 1 048 315          US-A- 4 042 494

## Description

L'invention concerne un procédé d'épuration des eaux usées par voie biologique, notamment les eaux usées domestiques, urbaines ou industrielles ou toutes eaux contenant des polluants ou impuretés en solution et en suspension, ces polluants et impuretés étant susceptibles d'être éliminés par voie biologique.

L'épuration des eaux usées ou résiduaires est effectuée a l'heure actuelle essentiellement par un procédé consistant a provoquer le développement, en présence d'oxygène, d'une culture bactérienne dispersée (encore appelée culture libre ou boues activées) dans des bassins de traitement, puis, après un contact suffisant, à séparer l'eau épurée des boues par décantation dans un clarificateur, une partie des boues étant recirculée dans un des bassins de traitement afin d'y maintenir une concentration suffisante en bactéries épuratrices tandis que le reste, représentant les boues activées en excès, est évacué de l'installation. Un tel procédé d'épuration cherche tant à éliminer la pollution carbonée organique qu'à oxyder la pollution azotée par nitrification. Par incorporation de périodes de contact entre les boues activées et les eaux à traiter en l'absence d'aération (contact anoxique), on peut amener les micro-organismes hétérotrophes à dégrader, en présence de carbone, les nitrates en azote gazeux pour effectuer une dénitrification. En outre, en faisant subir aux micro-organismes une alternance systématique des conditions anaérobie et aérobie, on peut provoquer une suraccumulation de composés phosphorés dans les micro-organismes et donner lieu à une déphosphatation biologique des eaux à traiter.

Au cours des vingt dernières années, de nombreuses variantes de ce procédé comportant divers agencements possibles des zones anaérobie, anoxie et aérobie ont été mises au point et ont donné lieu à de nombreux brevets et publications.

Or il a été constaté que, dans les procédés utilisant des boues activées, le paramètre limitant de la nitrification est non pas la cinétique de transformation de l'azote ammoniacal ou organique en nitrates mais l'âge (ou temps de séjour réel) des boues qui est nécessaire pour conserver dans l'installation les micro-organismes nitrifiants. Comme on le sait, les temps de formation de ces micro-organismes nitrifiants sont très longs et dépendent fortement de la température; ainsi, pour une température de 11°C, l'âge des boues doit être de 10 jours et l'on peut considérer que, pour des températures inférieures à 11°C, la croissance de ces micro-organismes est très ralentie. En outre, ces micro-organismes qui sont des micro-organismes aérobies stricts ne pouvant croître qu'en zone aérée, le temps de séjour qui doit être pris en compte est celui à obtenir dans le bassin d'aération; il en résulte qu'il faut prévoir, pour les bassins d'aération, des volumes importants et surdimensionnés par rapport à la cinétique.

Si on désigne par A l'âge de la boue, par T la température (°C) du bassin biologique et par Px la production journalière de boues en excès [kg de MES/j (matières solides/jour)], la masse de bornes activées Mba, en aération, pour la nitrification est alors donnée par l'équation suivante :

$$Mba = A \times Px \qquad (1)$$

avec

$$A = 4,5 \times 0,914^{(T-20)} \qquad (2)$$

ce qui conduit, selon les propositions de l'organisme allemand Abwasser Technischen Vereinigung E.V. (abrégé ci-après en ATV), à une production journalière de boues Px

$$Px = 0,6 \times (MES + DBO_5) - \frac{0,072 \times 0,6 \times K}{1 + 0,08 \times K} \times DBO_5 \qquad (3)$$

où

MES =    flux journalier de MES admis en traitement biologique (kg MES/j)

$DBO_5$=    flux journalier de $DBO_5$ admis en traitement biologique (kg $DBO_5$/j)

avec

$$K = A \times 1,072^{(T-15)} \qquad (4)$$

Le dimensionnement du volume d'aération est alors donné par l'équation suivante :

$$V = \frac{Mba}{Cba} \qquad (5)$$

où

$V$ =    volume d'aération ($m^3$)

$Mba$ =    masse de bornes activées (kg)

$Cba$ =    concentration en bornes activées (kg/$m^3$)

Plusieurs solutions ont été proposées pour diminuer ce volume d'aération.

Il a par exemple été proposé d'augmenter la concentration (Cba) de la biomasse en aération. Si Qt est le débit traversier, Qr le débit de recirculation et Cr la concentration du produit de recirculation, l'équation d'équilibre massique du clarificateur de décantation est la suivante :

$$Qr \times Cr = (Qt + Qr) \times Cba \qquad (6)$$

d'où l'on tire :

$$Cba = \frac{Cr \times Qr}{(Qt + Qr)} \qquad (7)$$

Comme Cr est obligatoirement plus grand que Cba, le clarificateur doit donc assurer une fonction d'épaississement pour permettre d'atteindre la concentration Cr. Mais la concentration d'épaississement d'une boue est fonction du temps d'épaississement (Tps) et des caractéristiques mécaniques de la boue. De telles caractéristiques mécaniques peuvent être exprimées par l'indice de sédimentation volumique en ml/g (c'est-à-dire le volume occupé par 1 g de boue après 30 mn de décantation), caractéristiques mécaniques ci-après décrites par ISV. Selon une proposition de l'ATV, on peut écrire :

$$Tps = \left(\frac{Cr \times ISV}{1000 \times K}\right)^3 \qquad (8)$$

ou

$$Cr = K \times \frac{1000}{ISV} \times \sqrt[3]{Tps} \qquad (9)$$

avec

Tps    temps d'épaississement des boues en clarification (h)
ISV =    indice volumique des boues (ml/g)
K    est une constante qui vaut 0,6 ou 0,7 selon la technique de reprise des boues.

Or, l'épaississement des boues en clarification s'effectuant en l'absence d'apport d'oxygène, Tps doit nécessairement être inférieur ou, au maximum, égal au temps de passage en anaérobiose des boues activées, si l'on veut éviter la dégradation de la qualité mécanique des boues et des performances de traitement. Un Tps de 3 h est généralement considéré comme la valeur maximale. En conséquence, en présence d'un très bon ISV correspondant à 100 ml/g, la concentration de recirculation Cr ne peut excéder 10 g/l si l'on applique l'équation (9).

En outre, Qr est limité, d'une part, par le volume de clarificateur imparti à l'épaississement des boues et, d'autre part, par les problèmes de distribution d'énergie à l'alimentation du clarificateur. Pour ces deux raisons, on adopte fréquemment une valeur de taux de recyclage (le taux de recyclage est défini par le rapport Qr/Qt) égal à 100% voire rarement 150%, du débit d'eau brute. Si l'on reprend le cas précédent d'un ISV de 100 ml/g, ce taux de recyclage se traduit selon l'équation (7) par une concentration en biomasse en aération Cba comprise entre 5 et 6 kg/m³, concentration traditionnellement observée sur les stations d'épuration.

Un autre moyen pour augmenter encore la concentration de la biomasse en aération est d'utiliser un système comportant d'une part un bassin dit de contact où s'effectue la transformation de l'azote ammoniacal en nitrates (nitrification) et d'autre part, sur le circuit de retour des boues, un bassin dit de stabilisation qui permet d'obtenir un âge des boues élevé. Dans ce cas, on retrouve les contraintes décrites ci-dessus, à savoir une concentration en boues activées égale à Cba dans le bassin de contact et une concentration égale à Cr dans le bassin de stabilisation, ce qui ne représente finalement qu'une faible diminution des volumes des ouvrages.

EP-A-0 309 352 décrit un procédé dans lequel l'obtention de l'âge des boues est effectuée dans un bassin de génération disposé en boucle extérieure aux bassins de réaction et qui est caractérisé en ce qu'avant de recycler les boues dans au moins un processus d'épuration, on effectue en amont du bassin de génération une étape de concentration desdites boues par flottation. Ce procédé permet une diminution importante du volume des ouvrages en ce sens que le problème de l'obtention de bornes âgées est traité dans un bassin fonctionnant en forte concentration (30 g/l) et que le dimensionnement des bassins de reaction est alors etabli sur les cinétiques réactionnelles.

En fait, le problème essentiel du fonctionnement des procédés à boues activées traditionnels est que l'on doit impérativement obtenir un âge de boues miniumum tout en recherchant des cinétiques élevées, et ce dans un contexte réactionnel qui n'est favorable ni à l'un ni à l'autre de ces paramètres. Des études ont démontré que ces paramètres et objectifs sont partiellement incompatibles, du fait que l'activité spécifique d'une borne décroît avec son âge.

Une solution est fournie par le procédé selon la revendication 1.

US-A-4 042 494 décrit la séparation totale des matières en suspension pour la préparation de boues activées dans un réacteur et leur réinjection dans la conduite transportant l'effluent primaire en vue de son traitement.

Le développement en aérobiose stricte de micro-organismes dans le réacteur de suractivation de boues permet l'obtention de boues suractivées à forte activité spécifique, particulièrement bien adaptées à l'élimination de la pollution azotée et à la déphosphatation biologique dans les bassins réactionnels des filieres traditionnelles de traitement des eaux usées par boues activées. Un avantage particulièrement intéressant de l'invention est d'obtenir un fonctionnement de l'installation d'épuration utilisant des boues activées, sur les seules limites des cinétiques biologiques des réactions mises en oeuvre dans les différents réacteurs biologiques, et ceci indépendamment des contraintes de maintien d'un âge de boues puisque celui nécessaire pour les bactéries de nitrification est obtenu dans un réacteur spécifique indépendant de la filière eaux et de la filière boues.

Cette indépendance du réacteur d'activation des boues activées le met par ailleurs à l'écart des conditions hydrauliques appliquées à la station, ce qui garantit dans ce réacteur a) le maintien de fortes concentrations en substrat et b) une parfaite maîtrise du temps de séjour des micro-organismes dans des conditions aérobies, avec les conséquences suivantes:

a) la forte concentration en substrat dans le réacteur de suractivation permet, du fait de l'exothermicité des réactions d'oxydation, d'obtenir dans le réacteur des températures (25 à 40°C) tout à fait favorables au développement des micro-organismes de la nitrification. Ainsi, si l'on applique l'équation (2), l'âge de boues théorique à maintenir dans le réacteur, pour obtenir le développement des micro-organismes de la nitrification, doit être compris entre 2,8 et 1 jour pour des températures variant entre 25 et 35°C.

b) Le maintien permanent de la culture biologique en aérobiose stricte dans le réacteur de suractivation permet d'obtenir des conditions optimales de croissance des micro-organismes aérobies stricts (tels que les micro-organismes autotrophes de la nitrification) et d'exercer une selection sur les micro-organismes anaérobies stricts et anaérobies facultatifs. En outre la puissance des réactions biologiques mises en oeuvre entraîne une dégradation importante du substrat (environ 35 à 50% d'élimination des matières organiques) donc des particules polluantes, avec par suite une diminution de 20 à 30% de la production de boues.

Un procéde d'épuration des eaux par voie biologique peut être mis en oeuvre selon les variantes suivantes, citées a titre d'exemple :

- Une étape d'oxydation de la pollution carbonée et une étape de nitrification qui s'effectuent dans des conditions aérobies et généralement dans le même réacteur biologique,
- une étape d'oxydation de la pollution carbonée, une étape de nitrification et une étape de dénitrification, qui peuvent s'effectuer dans le même réacteur biologique, les deux premières étapes s'effectuant dans des conditions aérobies et la dernière étape dans des conditions anoxies, le réacteur fonctionnant alternativement en aérobiose et en anoxie,
- une étape d'oxydation de la pollution carbonée, une etape de nitrification et une étape de dénitrification, cette dernière étape de dénitrification s'effectuant en anoxie dans un réacteur biologique distinct du réacteur d'oxydation et de nitrification, qui est situe en amont de ce dernier et dans lequel on recycle une partie du contenu du réacteur d'oxydation/nitrification.
- une étape d'oxydation de la pollution carbonée, une étape de nitrification, une étape de dénitrification et une étape de déphosphatation, cette dernière étape s'effectuant dans un réacteur biologique anaérobie qui est situé en amont du réacteur de dénitrification et dans lequel on recycle les eaux usees séparees des boues activées que l'on recueille en fin de chaîne.

Dans tous ces cas de figures, le réacteur de suractivation est placé en parallèle entre le séparateur et le premier réacteur biologique et les boues suractivées qu'il produit sont injectées au moins dans l'un des réacteurs biologiques ultérieurs, en continu ou en discontinu.

Afin d'améliorer le rendement de capture des particules polluantes, on met en oeuvre un réacteur de biosorption situé en amont du séparateur de particules polluantes, réacteur de biosorption dans lequel les eaux à traiter sont mises en contact avec des boues suractivées provenant du réacteur de suractivation.

Selon encore une variante, on peut effectuer l'élimination des nitrates formés dans le réacteur de suractivation, par mise en oeuvre d'un réacteur anoxique situé entre le séparateur des particules polluantes et le réacteur de suractivation.

Selon encore une variante, on peut apporter des substrats complémentaires dans le réacteur de suractivation dans le but d'acclimater les boues suractivées à l'élimination d'une pollution particulière ou dans le but d'augmenter l'activité spécifique desdites boues.

Le réacteur de suractivation peut également être utilisé comme réservoir de stockage et l'alimentation en boues suractivées dans les différents bassins de réaction biologique n'est alors assurée qu'en fonction des besoins, par exemple pendant les périodes de pointe, de manière à obtenir le meilleur rapport entre le flux de pollution et la biomasse.

Un des avantages de la mise en oeuvre du procédé selon la présente invention est qu'il est possible d'augmenter de manière très significative le temps de séjour des boues activées dans le réacteur de clarification sans craindre de dégrader la qualité des boues par anaérobiose. Ceci est dû d'une part à l'élimination poussée de la matrice organique des boues activées du fait de l'utilisation de boues suractivées et d'autre part aux conditions strictement aérobies maintenues dans le réacteur de suractivation. De ce fait, on obtient ISV = 80 et Tps = 6 ; si l'on applique l'équation (9), on trouve une concentration de produit de recirculation Cr de l'ordre de 15 kg/m$^3$, ce qui, pour un taux de recirculation de 150%, permet selon l'équation (7) de maintenir dans les bassins de réaction une concentration Cba de l'ordre de 9 kg/m$^3$.

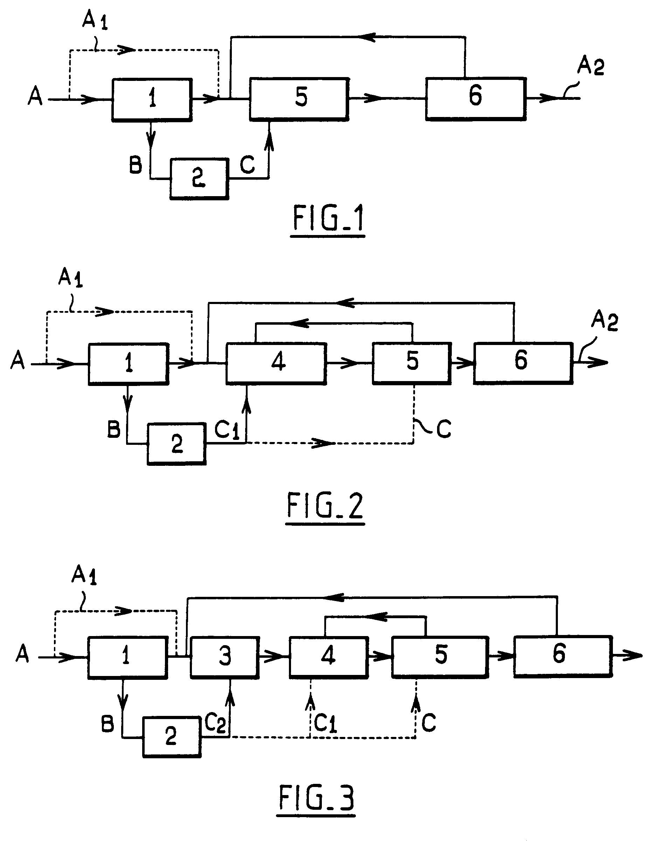

D'autres caractéristiques et avantages de la présente invention apparaîtront à la lecture détaillée des exemples de réalisation, donnés simplement à titre illustratif et non limitatif, avec référence aux figures 1 à 5 qui représentent schématiquement des procédés d'épuration d'eau selon la présente invention.

Sur les figures, les numéros de référence identiques se rapportent à des éléments identiques.

Sur la figure 1, est représenté un schéma d'une station d'épuration d'eaux utilisant un réacteur de suractivation selon la présente invention.

L'effluent à traiter A est admis dans un séparateur de phase 1, en partie; une partie A1 de l'effluent ne passe pas dans le séparateur 1. Dans le séparateur 1, on effectue la récupération des particules polluantes selon différents systèmes possibles, de manière dynamique ou de manière statique. L'effluent à traiter, debarrassé partiellement des particules polluantes, est envoyé dans un bassin de réaction 5 ou il est mis en contact avec des boues activées et d'où, après le temps de séjour necessaire à l'obtention de la ou des reactions biologiques, il est envoyé vers le clarificateur 6 dans lequel sont separes d'une part un effluent A2 correspondant aux normes de rejet recherchées et des boues activées qui sont recirculées vers le bassin de réaction 5. Les particules polluantes B quittent le séparateur de phase 1 et sont dirigées vers un réacteur de suractivation 2 dans lequel les micro-organismes se développent en aérobiose. Les boues suractivées C provenant du réacteur 2 sont injectées dans le bassin de réaction 5 de manière continue ou de manière discontinue.

Le bassin de réaction 5 peut fonctionner :

- dans des conditions aérobies pour effectuer l'oxydation de la pollution carbonée et pour effectuer simultanément la nitrification de l'azote ammoniacal et de l'azote organique;
- dans des conditions aérobies pour effectuer l'oxydation de la pollution carbonée et effectuer une nitrification puis dans des conditions anoxies pour assurer l'élimination de l'azote par dénitrification.

Le schéma représenté sur la figure 2 diffère du schéma représenté sur la figure 1, par l'adjonction d'un bassin de réaction de dénitrification 4, disposé en amont du bassin de réaction 5 dans lequel se fait alors l'oxydation de la pollution carbonée et la nitrification de l'azote, ainsi qu'éventuellement une dénitrification complémentaire par passage à des conditions anoxies. Une partie du contenu du bassin 5 ayant subi une oxydation de la pollution carbonée et une nitrification est recirculée au bassin 4 en vue de la dénitrification. Les boues suractivées provenant du bassin de suractivation 2 peuvent être injectées de manière continue ou discontinue dans le bassin de réaction 5 (boues C) ou dans le bassin de dénitrification 4 (boues C1).

La figure 3 represente un schema similaire a celui de la figure 2, auquel on a adjoint un bassin de déphosphatation biologique 3 dispose en amont du bassin de dénitrification 4 lui-meme disposé en amont du bassin de reaction 5. Comme précedemment, le bassin de réaction 5 assure l'oxydation de la pollution carbonée et la nitrification de l'azote en fonctionnement aérobie et, eventuellement, une dénitrification complémentaire en fonctionnement anoxie. Les boues suractivées formées dans le réacteur de suractivation 2 peuvent être injectées de manière continue ou discontinue dans le bassin de réaction 5 (boues C), dans le bassin de dénitrification (boues C1) ou dans le bassin de déphosphatation 3 (boues C2).

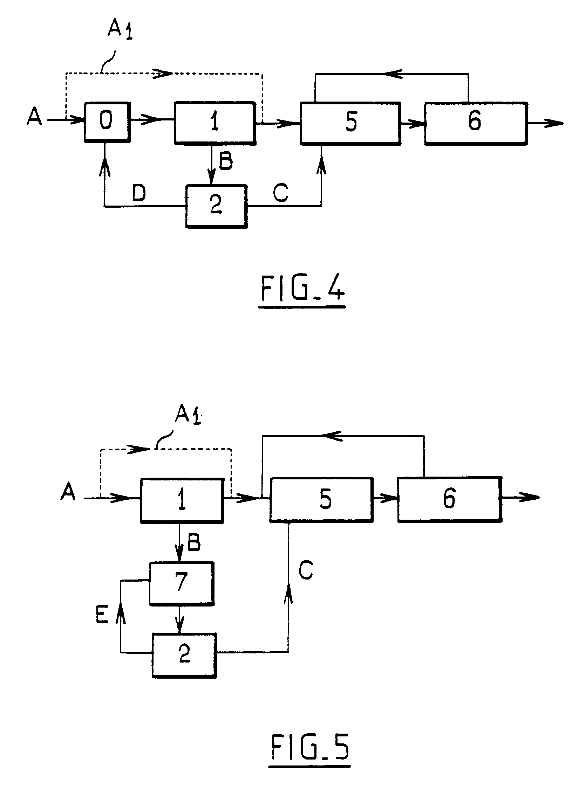

Le schéma représenté sur la figure 4 est une variante du procédé représenté sur le schéma de la figure 1, mais la variante qui y est décrite pourrait également être appliquée au schéma de traitement des figures 2 et 3.

Avant l'introduction des eaux usées à traiter A, avec ou non dérivation partielle A1, les eaux A sont traitées dans un réacteur de biosorption O dans lequel elles sont mises en contact avec des boues suractivées D provenant du réacteur de suractivation 2. Ceci permet d'améliorer le rendement de capture des particules polluantes du fait de la biofloculation qui se produit dans le réacteur O.

La figure 5 est une variante du procédé représenté sur la figure 1, mais cette variante pourrait également s'appliquer au schéma représenté sur les figures 2, 3 et 4.

La variante de la figure 5 consiste à prévoir une étape de prédénitrification dans un bassin de prédénitrification 7 situé entre le séparateur de phase 1 et le réacteur de suractivation 2.

Les particules polluantes B sont mises en contact dans le réacteur 7 avec les boues suractivées E contenant des nitrates provenant du réacteur de suractivation 2. Cette variante permet l'élimination au moins partielle des nitrates formés lors de la croissance des micro-organismes dans le réacteur de suractivation 2.

Les exemples suivants permettent d'illustrer les avantages fournis par la présente invention, et en particulier le pourcentage de volume gagné sur les ouvrages lorsque l'on met en oeuvre un réacteur de suractivation des boues situé en parallèle par rapport à la filière eau plus boues.

On utilise une installation correspondant au schéma de la figure 1 (un seul bassin de réaction dans lequel s'effectue l'oxydation de la pollution carbonée, et une étape de nitrification/dénitrification), on traite des eaux usées avec les valeurs de base suivantes :

| | |
|---|---|
| - Débit d'eau à traiter | 10 000 m³/j |
| - Flux journalier de $DBO_5$ | 3000 kg/j |
| - Flux journalier de MES | 3500 kg/j |
| - Flux journalier de NTK | 600 kg/j |
| - Température minimum | 11°C |

Exemple 1A - traitement classique sans décantation primaire.

Age des boues suivant l'équation (2) : 10 jours
Production de boues en excès suivant l'équation (3): 3725 kg/j
Masse de boues activées en aération 3725 x 10 = 37250 kg
IVS maximum possible 150 ml/g et Tps = 3 h
Concentration maximum de recirculation suivant l'équation (9); 6,3 kg/m³
Taux maximum de recirculation 150% ⇒ 630 m³/h

Vitesse maximum de clarification 0,7 m/h $\Rightarrow$ 1100 m$^2$

Volume de clarification 1100 + (630 x 3) = 3000 m$^3$

Concentration en boues activées suivant l'équation (7): 3,8 kg/m$^3$

Volume de l'aération suivant l'équation (1) $\simeq$ 10 000 m$^3$

Volume pour la dénitrification 30% du volume d'aération = 3000 m$^3$

Volume total du bassin de réaction 10000 + 3000 = 13000 m$^3$

Volume total des ouvrages 13000 + 3000 = 16000 m$^3$

Exemple 1B - traitement classique avec décantation primaire.

Vitesse moyenne appliquée au décanteur primaire : 0,9 m/h

Volume de décantation primaire $\simeq$ 1400 m$^3$

Taux d'abattement des MES en décantation primaire $\simeq$ 50%

Taux d'abattement de la DBO$_5$ $\simeq$ 35%

Taux d'abattement du NTK $\simeq$ 9%

Flux de MES admis en traitement biologique : 1750 kg/j

Flux de DBO$_5$ admis en traitement biologique : 1950 kg/j

Flux de NTK admis en traitment biologique : 546 kg/j

Age des boues suivant l'équation (2) : 10 jours

Production de boues en excès suivant l'équation (3) : 1822 kg/j

Masse de boues activées en aération 3725 x 10 = 18220 kg

IVS maximum possible 180 ml/g et Tps = 3 h

Concentration maximum de recirculation suivant l'équation (9) : 5,3 kg/m$^3$

Taux maximum de recirculation 150 % $\Rightarrow$ 630 m$^3$/h

Vitesse maximum de clarification 0,7 m/h $\Rightarrow$ 1100 m$^2$

Volume de clarification 1100 + (630 x 3) = 3000 m$^3$

Concentration eu boues activées suivant l'équation (7) : 3,2 kg/cm$^3$

Volume pour l'aération suivant l'équation (1)) $\simeq$ 5700 m$^3$

Volume pour la dénitrification 35% du volume d'aération : 5700 x 0,35 $\simeq$ 2000 m$^3$

Volume du bassin de réaction 2000 + 5700 = 7700 m$^3$

Volume total des ouvrages 7700 + 3000 + 1400 = 12100 m$^3$

Production totale de boues 1750 + 1822 = 3572 kg

Exemple 1C - installation de traitement utilisant un réacteur de suractivation selon la présente invention :

Vitesse moyenne appliquée au décanteur primaire : 0,9 m/h

Volume de décantation primaire $\simeq$ 1400 m$^3$

Taux d'abattement des MES en décantation primaire $\simeq$ 50%

Taux d'abattement de la DBO$_5$ $\simeq$ 35%

Taux d'abattement du NTK $\simeq$ 9%

Age des boues suivant l'équation (2) à 25°C : 2,8 j (on prendra une valeur de 4 j)

Production de boues suractivées 1250 kg/j

Masse de boues suractivées dans le réacteur 1250 x 4 = 5000 kg

Volume du réacteur d'hyper-activation 5000/20 = 250 m$^3$

Flux de MES admis en traitement biologique : 1750 kg/j

Flux de DBO$_5$ admis en traitement biologique : 1950 kg/j

Flux de NTK admis en traitement biologique : 546 kg/j

Flux de boues suractivées : 1250 kg/j

Cinétique de nitrification: 3,5 mg N-NO3 nitrifié/g de boue suractivée/h

Production de boues en excès suivant l'équation (3): 1822 kg/j

Azote en synthèse biologique: (1250 + 1822) x 5% = 154 kg/j

Azote à nitrifier : (600 - 154 - 10000 x 0,005) = 396 kg/j

Masse de boues suractivées pour la nitrification 396/(0,0035 x 24) = 4715 kg

Temps de séjour des boues suractivées dans le traitement biologique : 3,77 j

Masse totale des boues activées : (1250 + 1822) x 3,77 = 11581 kg

Cinétique de dénitrification : 2 mg N-NO3/g de boue suractivées/h

Masse d'azote à dénitrifier (396 - 10000 x 0,010) = 296 kg/j

Masse de boues activées pour la dénitrification 296/(0,002 x 24) = 6166 kg

IVS maximum possible 100 ml/g et Tps = 4 H

Concentration maximum de recirculation suivant l'équation (9): 10,4 kg/m$^3$

Taux maximum de recirculation : 150%

Concentration en boues activées suivant l'équation (7): 6,2 kg/m$^3$

Vitesse maximum de clarification 0,7 m/h $\Rightarrow$ 1100 m$^2$

Volume de clarification 1100 + (630 x 4) = 3620 m$^3$

Volume du bassin de réaction (1) : 11581/6,2 $\simeq$ 1868 m$^3$

Volume total des ouvrages : 1868 + 3620 + 250 + 1400 = 7138 m$^3$

Production totale de boues : 1250 + 1822 = 3072 kg/j.

On constate que l'on obtient sans difficulté une diminution qui peut être de 40 à 50% du volume des ouvrages selon la filière de départ utilisée.

## Revendications

1. Procédé d'épuration des eaux usées par voie biologique, dans lequel on effectue au moins une réaction biologique dans au moins un réacteur biologique contenant au moins des micro-organismes de traitement de la pollution carbonée dans des boues activées et on sépare les eaux traitées et les boues activées dans un bassin de clarification, avec recirculation au moins partielle des boues activées audit réacteur biologique, caractérisé en ce qu'avant l'introduction des eaux usées à traiter dans ledit réacteur biologique, on en sépare partiellement les particules polluantes en suspension, on envoie les particules polluantes séparées dans un réacteur de suractivation de boues, séparé et disposé eu parallèle, on utilise ces particules polluantes séparées comme substrat principal pour le développement de micro-organismes nitrifiants en aérobiose stricte et à une température de 25 à 40° et on injecte les boues suractivées ainsi obtenues dans au moins un réacteur biologique où s'effectue une étape de nitrification.

2. Procédé selon la revendication 1, caractérisé en ce qu'on utilise un réacteur biologique dans lequel on effectue l'oxydation de la pollution carbonée et une étape de nitrification.

3. Procédé selon la revendication 2, caractérisé en ce qu'on intercale, entre l'étape de séparation partielle des particules polluantes et la réaction biologique dans le réacteur biologique, une étape de dénitrification dans un réacteur de dénitrification dans lequel on injecte éventuellement des boues suractivées obtenues dans le réacteur de suractivation.

4. Procédé selon la revendication 2, caractérisé en ce qu'on fait travailler le réacteur biologique dans des conditions alternées d'aérobiose et d'anaérobiose.

5. Procédé selon la revendication 3, caractérisé en ce qu'on intercale entre l'étape de séparation partielle des particules polluantes et l'étape de dénitrification, une étape de déphosphatation biologique dans un réacteur de déphosphatation biologique dans lequel on injecte éventuellement des boues suractivées obtenues dans le réacteur de suractivation.

6. Procédé selon l'une quelconque des revendications 1 à 5, caractérisé en ce que, avant d'effectuer la séparation partielle des particules polluantes des eaux à traiter, on effectue une étape de biofloculation dans un réacteur de biosorption, par mise en contact des eaux à traiter avec des boues suractivées provenant du réacteur de suractivation.

7. Procédé selon l'une quelconque des revendications 1 à 6, caractérisé en ce que l'on intercale entre l'étape de séparation partielle des particules polluantes et l'étape de suractivation, une étape de dénitrification, dans un réacteur de dénitrification, dans lequel an injecte les boues suractivées obtenues dans le réacteur de suractivation.

8. Installations d'épuration d'eaux usées comprenant au moins un réacteur biologique (3,4,5) et un bassin de clarification (6), avec des conduites de recirculation des boues activées recueillies dans le bassin de clarification dans au moins un réacteur biologique, caractérisées en ce qu'elles comportent un séparateur de phases (1), un réacteur (2) de suractivation de boues séparé et disposé en parallèle dans lequel on développe en aérobiose stricte et à une température de 25 à 40°C des micro-organismes nitrifiants sur des particules polluantes séparées préalablement des eaux usées à traiter, et des conduites (C, $C_1$, $C_2$) permettant d'alimenter en boues suractivées provenant du réacteur de suractivation (2) au moins un réacteur biologique (3, 4, 5) où s'effectue une étape de nitrification.

## Claims

1. A method of purifying waste water biologically, in which at least one biological reaction is performed in at least one biological reactor containing at least microorganisms for treating the carbon pollution in activated sludge, and the treated water is separated from the activated sludge in a clarification basin, with at least part of the activated sludge being recirculated to said biological reactor, the method being characterized in that prior to inserting the waste water to be treated into said biological reactor, a fraction of the polluting particles in suspension therein are separated out therefrom, and the separated polluting particles are applied to a sludge superactivation reactor which is separated and disposed in parallel, said separated polluting particles are used as the main substrate for the development of nitrifying microorganisms in strict aerobiosis at a temperature of 25°C to 40°C, and the superactivated sludge obtained in this way is injected into at least one biological reactor in which a nitrification step takes place.

2. A method according to claim 1, characterized in that a biological reactor is used in which the carbon pollution is oxidized and a nitrification step is performed.

3. A method according to claim 2, characterized in that between the step of separating a fraction of the polluting particles and the biological reaction in the biological reactor, there is interposed a denitrification step in a denitrification reactor in which superactivated sludge obtained in the superactivation reactor is optionally injected.

4. A method according to claim 2, characterized in that the biological reactor is operated under alternating conditions of aerobiosis and of anaerobiosis.

5. A method according to claim 3, characterized in that between the step of separating a fraction of the polluting particles and the denitrification step, there is interposed a biological dephosphating step in a biological dephosphating reactor in which superactivated sludge obtained from the superactivation reactor is optionally injected.

6. A method according to any one of claims 1 to 5, characterized in that, prior to separating out a fraction of the polluting particles from the water to be treated, a bioflocculation step is performed in a biosorption reactor by putting the water to be treated into contact with superactivated sludge coming from the superactivation reactor.

7. A method according to any one of claims 1 to 6, characterized in that between the step of separating a fraction of the polluting particles and the superactivation step, there is interposed a denitrification step in a denitrification reactor in which the superactivated sludge obtained in the superactivation reactor is injected.

8. Waste water purification installations including at least a biological reactor (3, 4, 5) and a clarification basin (6) with ducts for recirculating activated sludge taken from the clarification basin to at least one biological reactor, characterized in that they include a phase separator (1), a reactor (2) for superactivation of separated sludge, which reactor is separate and disposed in parallel, in which nitrifying microorganisms are developed in strict aerobiosis and at a temperature in the range 25°C to 45°C, the nitrifying microorganisms being developed on polluting particles previously separated out from the waste water to be treated, ducts (C, C1, C2) also being provided to enable superactivated sludge taken from the superactivation reactor (2) to be fed at least to one biological reactor (3, 4, 5) where a nitrification step is performed.

**Patentansprüche**

1. Verfahren zur biologischen Reinigung von Abwasser, bei dem mindestens eine biologische Reaktion in wenigstens einem Bioreaktor durchgeführt wird, der im Belebtschlamm zumindest Mikroorganismen für die Behandlung der kohlenstoffhaltigen Verunreinigungen enthält, und man das behandelte Wasser und den Belebtschlamm in einem Klärbecken abtrennt mit mindestens teilweiser Rückführung des Belebtschlamms in den besagten Bioreaktor, dadurch gekennzeichnet, daß man vor der Einleitung des zu behandelnden Abwassers in den besagten Bioreaktor die suspendierten Schmutzteilchen teilweise abtrennt, die abgetrennten Schmutzteilchen in einen separaten und parallel angeordneten Reaktor für die Überaktivierung des Schlamms einleitet, diese abgetrennten Schmutzteilchen als Hauptsubstrat für die Vermehrung von nitrifizierenden Mikroorganismen bei strikter Aerobiose und bei einer Temperatur von 25 - 40°C verwendet, und der so erhaltene überaktivierte Schlamm in wenigstens einen Bioreaktor eingeleitet wird, in dem ein Nitrifikationsschritt erfolgt.

2. Verfahren gemäß Anspruch 1, dadurch gekennzeichnet, daß man einen Bioreaktor verwendet, in dem die Oxidation der kohlenstoffhaltigen Verunreinigungen und ein Nitrifikationsschritt durchgeführt werden.

3. Verfahren gemäß Anspruch 2, dadurch gekennzeichnet, daß man zwischen die Stufe, in der die teilweise Abtrennung der Schmutzteilchen erfolgt, und die biologische Reaktion im Bioreaktor eine Denitrifikationsstufe in einem Denitrifikationsreaktor einschaltet, in den man eventuell überaktivierten Schlamm aus dem Reaktor für die Überaktivierung einleitet.

4. Verfahren gemäß Anspruch 2, dadurch gekennzeichnet, daß man den Bioreaktor abwechselnd unter aeroben und anaeroben Bedingungen arbeiten läßt.

5. Verfahren gemäß Anspruch 3, dadurch gekennzeichnet, daß man zwischen die Stufe, in der die teilweise Abtrennung der Schmutzteilchen erfolgt, und die Denitrifikationsstufe eine biologische Dephosphatierungsstufe in einem Reaktor für die biologische Dephosphatierung einschaltet, in den man eventuell überaktivierten Schlamm aus dem Reaktor für die Überaktivierung einleitet.

6. Verfahren gemäß einem der Ansprüche 1 - 5, dadurch gekennzeichnet, daß vor Durchführung der teilweisen Abtrennung der Schmutzteilchen aus dem zu behandelnden Wasser in einem Biosorptionsreaktor ein Bioflockungsschritt durchgeführt wird, wobei man das zu behandelnde Wasser mit überaktiviertem Schlamm aus dem Reaktor für die Überaktivierung in Kontakt bringt.

7. Verfahren gemäß einem der Ansprüche 1 - 6, dadurch gekennzeichnet, daß man zwischen die Stufe, in der die teilweise Abtrennung der Schmutzteilchen erfolgt, und die Überaktivierungsstufe eine Denitrifikationsstufe in einem Denitrifikationsreaktor einschaltet, in den man den im Reaktor für die Überaktivierung erhaltenen überaktivierten Schlamm einleitet.

8. Abwasserreinigungsanlagen, die mindestens einen Bioreaktor (3,4,5) und ein Klärbecken (6) umfassen, mit Rückflußleitungen für den im Klärbecken anfallenden Belebtschlamm in mindestens einen Bioreaktor, dadurch gekennzeichnet, das sie über ein Phasentrennbecken (1) und einen separaten und parallel angeordneten Reaktor für die Überaktivierung des Schlamms (2) verfügen, in dem man bei strikter Aerobiose nitrifizierende Mikroorganismen bei einer Temperatur von 25 - 40°C auf vorher aus dem zu behandelnden Abwasser abgetrennten Schmutzteilchen vermehrt, sowie über Leitungen $(C, C_1, C_2)$, durch die man den aus dem Reaktor für die Überaktivierung (2) stammenden überaktivierten Schlamm in mindestens einen Bioreaktor (3,4,5) einspeisen kann, in dem ein Nitrifikationsschritt durchgeführt wird.

FIG.1

FIG.2

FIG.3

FIG. 4

FIG. 5